# EUROPEAN PATENT SPECIFICATION

(11) **EP 4 019 795 B1**
(45) Date of publication and mention of the grant of the patent: **31.07.2024**
(21) Application number: 21215246.6
(22) Date of filing: 16.12.2021
(51) Int. Cl.: F16D 48/02, F16D 67/04

(54) **POWER TAKE-OFF ASSEMBLY FOR A WORK VEHICLE COMPRISING A HYDRAULIC ARRANGEMENT AND A RELATED CONTROL METHOD**
ZAPFWELLENANORDNUNG FÜR EIN ARBEITSFAHRZEUG MIT EINER HYDRAULISCHEN ANORDNUNG UND ENTSPRECHENDES STEUERVERFAHREN
ENSEMBLE PRISE DE FORCE POUR UN VÉHICULE DE TRAVAIL COMPRENANT UN AGENCEMENT HYDRAULIQUE ET PROCÉDÉ DE COMMANDE ASSOCIÉ

(30) Priority: 23.12.2020 IT 202000032174
(43) Date of publication of application: 29.06.2022
(73) Proprietor: CNH Industrial Italia S.p.A., 10156 Torino (IT)
(72) Inventor: Huber, Roland, 4391 Waldhausen (AT); Guselbauer, Christoph, 4481 Asten (AT); Koeck, Reinhard, 4360 Grein (AT)
(74) Representative: CNH Industrial IP Department

(56) References cited:
- EP-A2- 1 295 750
- JP-A- 2005 263 117

## Description

### TECHNICAL FIELD

The present invention concerns power take-off assembly for a work vehicle comprising a hydraulic arrangement and a related control method, in particular for a hydraulic arrangement for managing the control of brakes and clutches of such power take off assembly.

### BACKGROUND OF THE INVENTION

Work vehicles such as agricultural vehicles comprise a power take-off (PTO) assembly comprising, in turn, a powertrain configured to provide a torque at a power take-off shaft.

Such PTO assembly usually comprises at least one clutch, which is configured to selectively couple the power take-off shaft with the output shaft of a mechanical power source of the work vehicle and at least one brake, which is configured to impart a braking torque to the power take-off shaft.

The PTO assembly comprises a hydraulic system for the actuation of such brakes and clutches. This hydraulic system generally comprises a brake line fluidly connecting a source of fluid in pressure to the brake and a clutch line fluidly connecting the source to the clutch.

In detail, the brake and the clutch are actuated according to the pressure of the fluid inside the brake line and the clutch line, respectively.

The passage of fluid between the source and, respectively, the clutch and the brake is usually controlled by respective electro-actuated valves. Accordingly, the PTO assembly hydraulic system comprises a first electro-actuated valve for regulating the pressure of the fluid flowing in the brake line and a second electro-actuated valve for regulating the pressure of the fluid flowing in the clutch line as shown in the generic EP1295750A2 and in JP2005263117A.

However, this arrangement comprising two electro-actuated valves leaves room for improvement. In fact, the first and second electro-actuated valves are expensive and bulky.

Therefore, the need is felt to obtain a hydraulic arrangement for a PTO assembly that allows to control the actuation of the brake and the clutch of the work vehicle in a cost-effective and compact manner.

An aim of the present invention is to satisfy the above mentioned needs in a cost-effective and optimized manner.

### SUMMARY OF THE INVENTION

The aforementioned aim is reached by a power take-off assembly comprising a hydraulic arrangement and a related control method as claimed in the appended independent claims.

Preferred embodiments of the invention are realized according to the claims dependent on independent claim 1.

### BRIEF DESCRIPTION OF DRAWINGS

For a better understanding of the present invention, a preferred embodiment is described in the following, by way of a non-limiting example, with reference to the attached drawings wherein:
- Figure 1 is a cross section of a portion of a power take-off assembly comprising a hydraulic arrangement according to the present invention in a first operative configuration;
- Figure 1a is the cross section of figure 1 wherein arrows have been added to indicate the direction of the fluid in pressure within the hydraulic arrangement;
- Figure 2 illustrates the cross-sectional view of figure 1 with the hydraulic arrangement in a second operative configuration; and
- Figure 2a is the cross section of figure 2, wherein arrows have been added to indicate the direction of the fluid in pressure within the hydraulic arrangement.

### DETAILED DESCRIPTION OF THE INVENTION

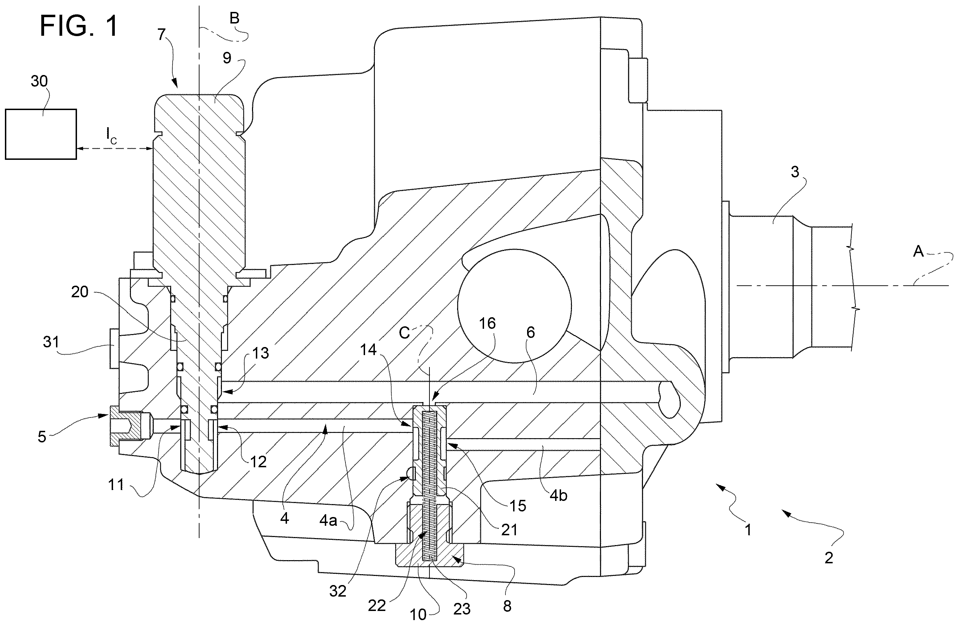

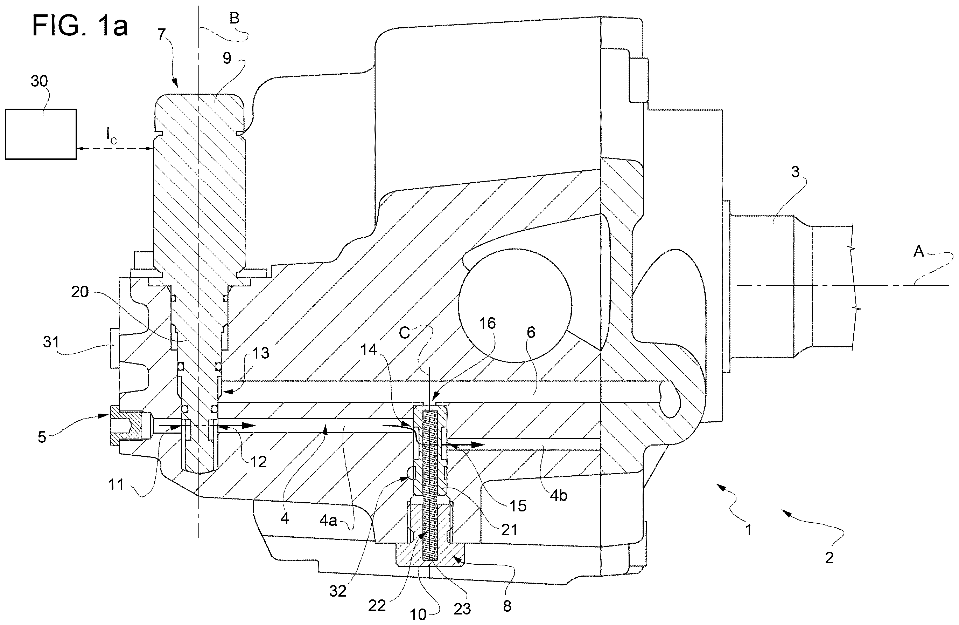

With reference to Figures 1 to 4, numeral 2 indicates a power take-off, PTO, assembly of a work vehicle, in particular a specialty vehicle or an agricultural vehicle, such as a tractor or an earth moving machine.

PTO assembly 2 comprises a powertrain with an output shaft 3, which is rotatable about a longitudinal axis A and is installed on the work vehicle in a position that allows it to power external implements by means of mating fittings.

PTO assembly 2 further comprises a clutch configured to selectively couple output shaft 3 to a mechanical power source of the work vehicle, and a brake configured to impart a braking torque to output shaft 3. The mechanical power source is, for example, a combustion engine and/or one or more electric motors of the work vehicle that may be coupled to the transmission e.g. to an input shaft 31. In the disclosed embodiment, input shaft 31 is parallel to longitudinal axis A of output shaft 3.

Furthermore, PTO assembly 2 comprises a hydraulic arrangement 1 for controlling the operation of the clutch and the brake.

In particular, the hydraulic arrangement 1 comprises, in turn, a brake line 4 fluidly connecting a source 5 of fluid in pressure of the work vehicle to the brake and a clutch line 6 fluidly connecting the source 5 to the clutch. The fluid in pressure is a fluid suitable for actuating both the brake and the clutch, such as a mineral oil.

In detail, the brake can be set in a braked configuration, in which it imparts, in use, the braking torque to output shaft 3, so as to prevent output shaft 3 from freely rotating about longitudinal axis A or in an unbraked configuration, in which it allows, in use, output shaft 3 to freely rotate about longitudinal axis A.

According to a preferred embodiment, the brake is set by default in the braked configuration, for safety reasons, so as to prevent output shaft 3 from undesirably rotating about longitudinal axis A.

The hydraulic arrangement 1 further comprises first valve means 7 configured to control the flow of fluid between source 5, brake line 4 and clutch line 6; and second valve means 8 configured to control the flow of fluid between source 5 and the brake.

Advantageously, first valve means 7 comprise an electro-actuated valve 9 and second valve means 8 comprise a hydraulic-actuated valve 10. In detail, the hydraulic-actuated valve 10 is controlled as a function of a pressure p0 of the fluid inside clutch line 6.

Furthermore, PTO assembly 2 comprises a control unit 30, which is operatively connected to electro-actuated valve 9.

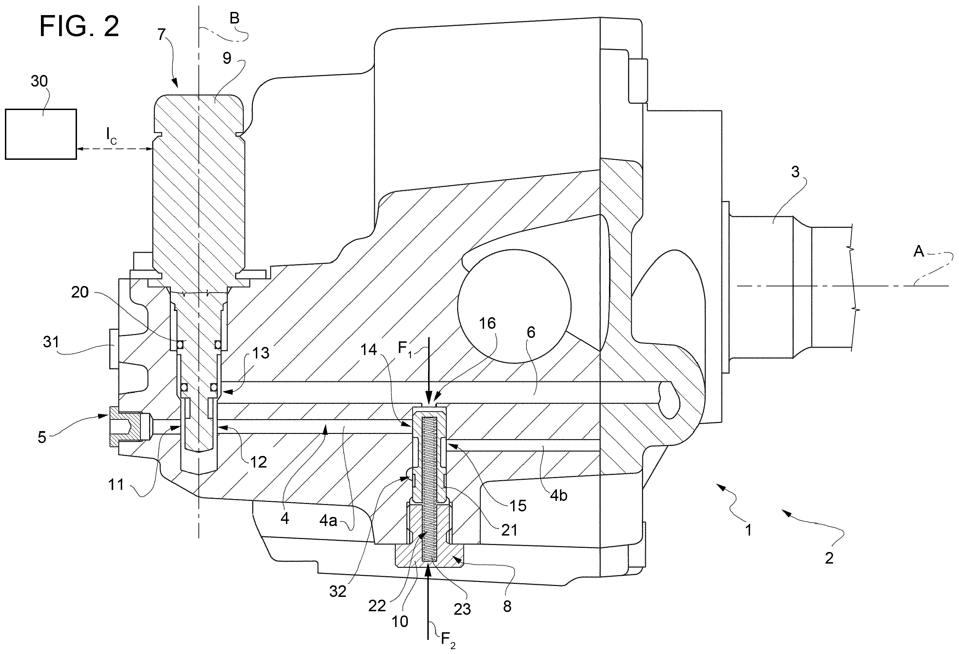

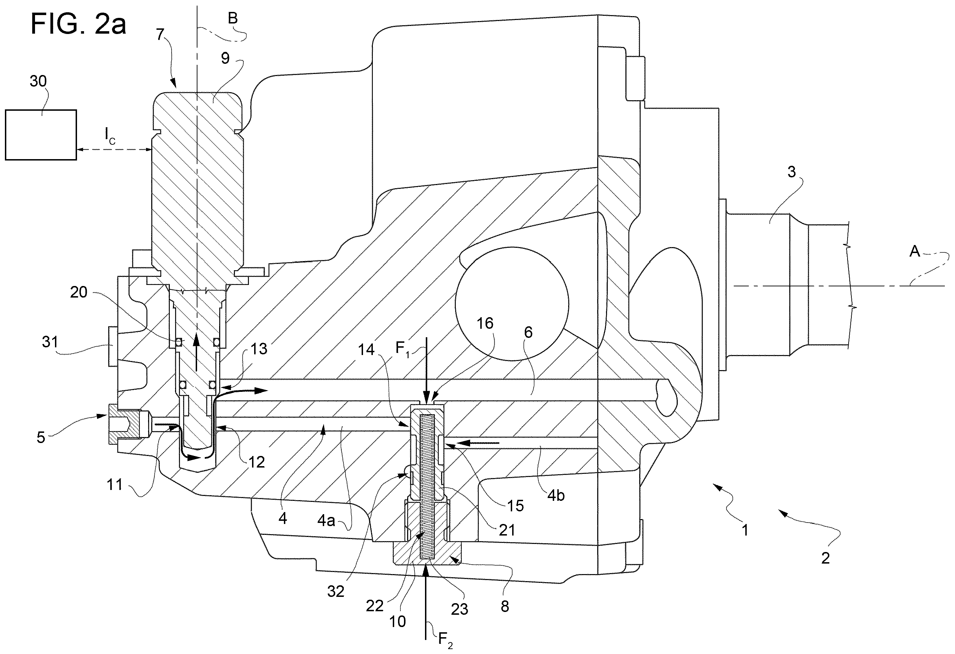

Hydraulic arrangement 1 can be set in a first configuration, which is illustrated in figures 1 and 1a, in which first valve means 7 allow a fluidic connection between source 5 and brake line 4 and second valve means 8 allow a fluidic connection between source 5 and the brake. Hydraulic arrangement 1 can be further set in a second configuration, which is illustrated in figures 2 and 2a, in which first valve means 7 allow a fluidic connection of both brake and clutch lines 4, 6 with source 5 and second valve means 8 deny the fluidic connection between source 5 and the brake.

In detail, the brake is set in the braked configuration or in the unbraked configuration when, in use, hydraulic arrangement 1 is respectively in the first or in the second configuration.

Furthermore, the clutch is activated - i.e. it connects, in use, output shaft 3 to input shaft 31 - if a pressure p0 of the fluid in clutch line 6 is equal to or greater than a clutch engagement pressure p2.

In detail, in order to control the flow of fluid between source 5, the clutch and the brake, electro-actuated valve 9 can be a three ways-two positions valve.

In further detail, electro-actuated valve 9 comprises a spool 20 configured to move in a respective seat of PTO assembly 2 along an axis B to close or open, totally or partially, a first, a second and a third opening 11, 12, 13. Preferably, such openings 11, 12, 13 are realized in the body of PTO assembly 2 and, furthermore, first opening 11 is fluidly connected to source 5, second opening 12 is fluidly connected to brake line 4 and third opening 13 is fluidly connected to clutch line 6.

Consequently to the above, electro-actuated valve 9 is a proportional valve; therefore, the pressure of the fluid in clutch and brake lines 4, 6 can be varied depending on whether spool 20 partially or completely opens second and third openings 12, 13, respectively.

Spool 20 can be set in a first position (shown in figures 1 and 1a), in which first valve means 7 allow a fluidic connection between source 5 and brake line 4 through second opening 12, in a second position (shown in figures 2 and 2a), in which first valve means 7 allow a fluidic connection between source 5 and brake line 4 through second opening 12 and between source 5 and clutch line 6 through third opening 13, or in a plurality of intermediate positions between the latter first and second positions. In the embodiment shown, spool 20 in the second position totally opens the passage through third opening 13.

In detail, first valve means 7 deny the fluidic connection between source 5 and clutch line 6 when, in use, spool 20 is in the first position.

Control unit 30 is configured to control the position of spool 20 of electro-actuated valve 9 between the first and the second position by sending to such valve an appropriate electric signal I_{C}.

In the embodiment shown, first valve means 7 are controlled to constantly allow the fluidic connection between source 5 and brake line 4. Furthermore, spool 20 constantly completely opens first and second openings 11, 12.

In further detail, control unit 30 is configured to control electro-actuated valve 9 so as to vary the extent to which third opening 13 is opened by spool 20.

Furthermore, second valve means 8 are fluidly interposed in brake line 4, thereby defining a first brake line portion 4a and a second brake line portion 4b.

Preferably, hydraulic-actuated valve 10 is a three ways-two positions valve and more preferably a proportional valve.

In detail, hydraulic-actuated valve 10 comprises a spool 21 configured to move in a respective seat of PTO assembly 2 along an axis C and configured to partially and/or totally open/close a fourth and a fifth opening 14, 15. In particular, openings 14 and 15 are realized in the body of PTO assembly 2 and, furthermore, fourth opening 14 is fluidly connected to first brake line portion 4a and fifth opening 15 is fluidly connected to second brake line portion 4b.

Spool 21 can be set in a first position (figures 1 and 1a), in which second valve means 8 allow a fluidic connection between first brake line portion 4a and second brake line portion 4b, in a second position (figures 2 and 2a), in which second valve means 8 deny a fluidic connection between first brake line portion 4a and second brake line portion 4b, and in a plurality of intermediate positions between the latter first and second positions.

Hydraulic arrangement 1 further comprises a discharge 32, which is configured to discharge the fluid in second brake line portion 4b when, in use, spool 21 is in the second position. In detail, when spool 21 is set, in use, in the second position, second valve means 8 allow a fluidic connection between second brake line portion 4b and discharge 32.

Spool 21 is actuated by means of a hydraulic pilot signal, which is spilled from clutch line 6. Such hydraulic pilot signal is proportional to pressure p0 of the fluid in clutch line 6.

In detail, clutch line 6 defines an opening 16, which is in fluidic communication with spool 21, so as allow the hydraulic pilot signal to be spilled from clutch line 6 through opening 16.

In further detail, the fluid in clutch line 6 exerts, in use, a force F₁ on spool 21 through opening 16. Force F₁ depends on pressure p0 of the fluid in clutch line 6, in particular, it is directly proportional to pressure p0. Furthermore, second valve means 8 comprise elastic means 22, which are adapted to bias spool 21 towards its first position. In the embodiment shown, elastic means 22 comprise a helical spring 23.

Elastic means 22 exert, in use, a force F₂ on spool 21, which is directed opposite to force F₁.

In detail, second valve means 8 are configured to be set in the second position when, in use, the pressure p0 of the fluid in clutch line 6 is equal to or greater than a brake disengagement pressure p1. In further detail, brake disengagement pressure p1 is proportional to the minimum force F₁ that is sufficient to move spool 21 against force F₂ in the second position.

In particular, clutch engagement pressure p2 is greater than brake disengagement pressure p1. Therefore, when pressure p0 is equal to or greater than brake disengagement pressure p1, but lower than clutch engagement pressure p2, the brake can be unbraked, without causing the activation of the clutch.

It is further possible to define a third position and a fourth position of spool 20.

In detail, in the third position, which is intermediate between the first and the second positions of spool 20, spool 20 is configured to partially open opening 13 in such a manner that pressure p0 is equal to or greater than brake disengagement pressure p1, but lower than clutch engagement pressure p2. In the fourth position, which is intermediate between the third position and the second position of spool 20, spool 20 is configured to partially open opening 13 in such a manner that pressure p0 is equal to or greater than clutch engagement pressure p2.

Control unit 30 is configured to control spool 20 in the third or fourth position by modulating the electric signal I_{C}.

When, in use, the brake is in the unbraked configuration and the clutch is not activated, output shaft 3 is freely rotatable about longitudinal axis A.

According to a preferred embodiment, brake disengagement pressure p1 is approximately equal to 0.5 bar and clutch engagement pressure p2 is approximately equal to 1,5 bar.

The operation of hydraulic arrangement 1 according to the invention and described as above is illustrated starting from the condition shown in figures 1 and 1a.

In this condition, hydraulic arrangement 1 is set in the first configuration, therefore first valve means 7 allow the fluidic connection between source 5 and brake line 4 and second valve means 8 allow the fluidic connection between source 5 and the brake. In further detail, spools 20 and 21 are set in the respective first positions.

In addition, in this condition the brake is set in the braked configuration, the clutch is not activated and output shaft 3 is stationary.

If it is necessary to set the brake in the unbraked configuration without activating the clutch, control unit 30 controls electro-actuated valve 9 so as to set spool 20 in the third position. Accordingly, pressure p0 is set equal to or greater than brake disengagement pressure p1, but lower than clutch engagement pressure p2 and, therefore, force F₁ is set greater than force F₂.

As a result, spool 21 slides from its first position to its second position, in which it denies the fluidic connection between first and second brake line portions 4a, 4b. The fluid in second brake line portion 4b is then discharged through discharge 32.

Therefore, first valve means 7 allow the fluidic connection of both brake and clutch lines 4, 6 with source 5, second valve means 8 deny the fluidic connection between source 5 and the brake and hydraulic configuration 1 is set in the second configuration.

Since the brake is in the unbraked configuration and the clutch is not activated, output shaft 3 can be freely rotated, e.g. manually rotated, about longitudinal axis A.

If it is necessary to power external implements by means of PTO assembly 2, the clutch has to be activated and the brake has to be set in the unbraked configuration.

To this purpose, control unit 30 controls electro-actuated valve 9 so as to set spool 20 in the fourth position or in the second position. Accordingly, pressure p0 is set equal to or greater than clutch engagement pressure p2. Consequently, force F₁ is set greater than force F₂ and spool 21 is moved to or kept at the second position. The fluid in second brake line portion 4b is then discharged through discharge 32.

Therefore, first valve means 7 allow the fluidic connection of both brake and clutch lines 4, 6 with source 5, second valve means 8 deny the fluidic connection between source 5 and the brake and hydraulic configuration 1 is set in the second configuration. As a result, the clutch is activated, the brake is unbraked and external implements can be powered by output shaft 3.

As clear from the above described operation, the invention also relates to a method for controlling PTO assembly 2, comprising the steps of:
- receiving a request to unbrake output shaft 3 and uncouple the clutch;
- providing control signal I_{C} to electro-actuated valve 9, so as to vary the pressure p0 of the fluid in clutch line 6 so that the pressure p0 of the fluid in clutch line 6 is equal to or greater than brake disengagement pressure p1, but lower than clutch engagement pressure p2.

The aforementioned method can be performed by the electronic unit 30 that is provided with suitable elaboration means.

In view of the foregoing, the advantages of a power take off assembly comprising a hydraulic arrangement 1 according to the invention are apparent.

In particular, since hydraulic arrangement 1 comprises only one electro-actuated valve 9 and hydraulic-actuated valve 10 is controlled as a function of pressure p0 of the fluid in clutch line 6, the operation of the brake and the clutch of PTO assembly 2 can be controlled in a cost-effective and compact manner. In fact, hydraulic-actuated valve 10 is less bulky and expensive than an electro-actuated valve.

Furthermore, since brake disengagement pressure p1 is lower than clutch engagement pressure p2, the brake can be set in the unbraked configuration without causing the activation of the clutch. As a result, when the brake is unbraked and the clutch is not activated, output shaft 3 is freely rotatable about longitudinal axis A. This can be particularly advantageous, for example, when it is necessary to manually rotate output shaft 3.

It is clear that modifications can be made to the described power take off assembly which do not extend beyond the scope of protection defined by the claims.

In particular, PTO assembly 2 may comprise more than one output shaft 3, more than one clutch and/or more than one brake.

## Claims

1. Power take-off, PTO, assembly (2) for a work vehicle, said PTO assembly (2) comprising:
- at least one output shaft (3);
- at least one clutch, which is configured to selectively couple said output shaft (3) to a mechanical power source of said work vehicle; and
- at least one brake, which is configured to impart a braking torque to said output shaft (3); and
- a hydraulic arrangement (1) comprising:
- a brake line (4) fluidly connecting a source of fluid in pressure (5) of said work vehicle to said at least one brake; and
- a clutch line (6) fluidly connecting said source (5) to said at least one clutch;
said hydraulic arrangement (1) further comprising:
- first valve means (7), which are configured to control the flow of fluid between said source (5), said brake line (4) and said clutch line (6); and
- second valve means (8), which are configured to control the flow of fluid between said source (5) and said at least one brake;
wherein said first valve means (7) comprise an electro-actuated valve (9) and said second valve means (8) comprise a hydraulic-actuated valve (10); said hydraulic-actuated valve (10) being controlled as a function of the pressure (p0) of said fluid inside said clutch line (6),
said hydraulic arrangement (1) is settable in at least:
- a first configuration, in which said first valve means (7) allow a fluidic connection between said source (5) and said brake line (4) and said second valve means (8) allow a fluidic connection between said source (5) and said at least one brake; or
- a second configuration, in which said first valve means (7) allow a fluidic connection of both said brake and clutch lines (4, 6) with said source (5) and said second valve means (8) deny the fluidic connection between said source (5) and said at least one brake;
said PTO assembly being **characterized in that** it further defines:
- a first opening (11), which is fluidly connected to said source (5);
- a second opening (12), which is fluidly connected to said brake line (4); and
- a third opening (13), which is fluidly connected to said clutch line (6);
wherein said first valve means (7) comprise a spool (20), which is settable at least in:
- a first position, in which said first valve means (7) allow a fluidic connection between said source (5) and said brake line (4) through said second opening (12);
- a second position, in which said first valve means (7) allow a fluidic connection between said source (5) and said brake line (4) through said second opening (12) and between said source (5) and said clutch line (6) through said third opening (13).

2. Power take-off assembly according to any one of the foregoing claims, wherein said second valve means (8) are fluidly interposed in said brake line (4), thereby defining a first brake line portion (4a) and a second brake line portion (4b) of said brake line (4);
said PTO assembly (2) further defining:
- a fourth opening (14), which is fluidly connected to said first brake line portion (4a); and
- a fifth opening (15), which is fluidly connected to said second brake line portion (4b);
wherein said second valve means (8) comprise a spool (21), which is settable at least in:
- a first position, in which said second valve means (8) allow a fluidic connection between said first brake line portion (4a) and said second brake line portion (4b) through fourth and fifth openings (14, 15), respectively; and
- a second position, in which said second valve means (8) deny a fluidic connection between said first brake line portion (4a) and said second brake line portion (4b).

3. Power take-off assembly according to claim 2, wherein the spool (21) of said second valve means (8) is actuated by means of a hydraulic pilot signal, which is spilled from said clutch line (6).

4. Power take-off assembly according to claim 2 or 3, wherein said second valve means (8) further comprise elastic means (22), which are adapted to bias said spool (21) towards its first position.

5. Power take-off assembly according to claim 4, when depending on claim 3, wherein said clutch line (6) defines a further opening (16), which is in fluidic communication with the spool (21) of said second valve means (8); said hydraulic pilot signal being spilled from said clutch line (6) through said further opening (16);
wherein said fluid in said clutch line (6) exerts, in use, a first force (F₁) on the spool (21) of said second valve means (8) through said further opening (16); said first force (F₁) depending on said pressure (p0) of said fluid in said clutch line (6);
wherein said elastic means (22) exert, in use, a second force (F₂) on said spool (21) of said second valve means (8); said first force (F₁) being directed opposite to said second force (F₂) .

6. Power take-off assembly according to claim 5, wherein said spool (21) of said second valve means (8) is configured to be set in said second position when, in use, said pressure (p0) of said fluid in said clutch line (6) is equal to or greater than a brake disengagement pressure (p1);
said first force (F₁) being greater than said second force (F₂) when, in use, said pressure (p0) of said fluid in said clutch line (6) is equal to or greater than said brake disengagement pressure (p1).

7. Power take-off assembly according to claim 6, wherein said pressure (p0) of said fluid in said clutch line (6) is equal to or greater than a clutch engagement pressure (p2);
said clutch engagement pressure (p2) being the pressure at which said at least one clutch is activated, in use;
said brake disengagement pressure (p1) being lower than said clutch engagement pressure (p2).

8. Power take-off assembly according to claim 7, wherein said output shaft (3) defines a longitudinal axis (A); said output shaft (3) being freely rotatable about said longitudinal axis (A) when, in use, said pressure (p0) of said fluid in said clutch line (6) is equal to or greater than said brake disengagement pressure (p1) and lower than said clutch engagement pressure (p2).

9. Power take-off assembly according to any one of claims 6 to 8, wherein said brake disengagement pressure (p1) is approximately 0.5 bar.

10. Power take-off assembly according to any preceding claims, further comprising a control unit (30), which is configured to control electro-actuated valve (9) of said hydraulic arrangement (1).

11. Method for controlling a power take-off, PTO, assembly (2) according to any of the preceding claims said method comprising the steps of:
- receiving a request to unbrake said output shaft (3) and uncouple said at least one clutch;
- providing a control signal (I_{C}) to said electro-actuated valve (9) so as to vary the pressure (p0) of said fluid in said clutch line (6) so that the pressure (p0) of said fluid in said clutch line (6) is equal to or greater than a brake disengagement pressure (p1), but lower than a clutch engagement pressure (p2);
said brake disengagement pressure (p1) being the pressure at which said at least one brake is unbraked; said clutch engagement pressure (p2) being the pressure at which said at least one clutch is activated.

## Patentansprüche

1. Zapfwellen (PTO)-Anordnung (2) für ein Arbeitsfahrzeug, wobei die PTO-Anordnung (2) umfasst:
- mindestens eine Ausgangswelle (3);
- mindestens eine Kupplung, die dazu eingerichtet ist, die Ausgangswelle (3) wahlweise mit einer mechanischen Energiequelle des Arbeitsfahrzeugs zu koppeln; und
- mindestens eine Bremse, die dazu eingerichtet ist, ein Bremsmoment auf die Ausgangswelle (3) auszuüben; und
- eine Hydraulikanordnung (1) mit:
- einer Bremsleitung (4), die eine Quelle (5) von unter Druck stehendem Fluid des Arbeitsfahrzeugs mit der mindestens einen Bremse fluidisch verbindet; und
- einer Kupplungsleitung (6), die die Quelle (5) mit der mindestens einen Kupplung fluidisch verbindet;
wobei die Hydraulikanordnung (1) des Weiteren umfasst:
- eine erste Ventileinrichtung (7), die dazu eingerichtet ist, den Fluss an Fluid zwischen der Quelle (5), der Bremsleitung (4) und der Kupplungsleitung (6) zu steuern; und
- eine zweite Ventileinrichtung (8), die dazu eingerichtet ist, den Fluss an Fluid zwischen der Quelle (5) und der mindestens einen Bremse zu steuern;
wobei die erste Ventileinrichtung (7) ein elektrisch betätigtes Ventil (9) aufweist und die zweite Ventileinrichtung (8) ein hydraulisch betätigtes Ventil (10) aufweist; wobei das hydraulisch betätigte Ventil (10) in Abhängigkeit von dem Druck (p0) des Fluids innerhalb der Kupplungsleitung (6) gesteuert wird,
wobei die Hydraulikanordnung (1) zumindest einstellbar ist in:
- eine erste Konfiguration, in der die erste Ventileinrichtung (7) eine fluidische Verbindung zwischen der Quelle (5) und der Bremsleitung (4) ermöglicht und in der die zweite Ventileinrichtung (8) eine fluidische Verbindung zwischen der Quelle (5) und der mindestens einen Bremse ermöglicht; oder
- eine zweite Konfiguration, in der die erste Ventileinrichtung (7) eine fluidische Verbindung sowohl der Bremsleitung als auch der Kupplungsleitung (4, 6) mit der Quelle (5) ermöglicht und in der die zweite Ventileinrichtung (8) eine fluidische Verbindung zwischen der Quelle (5) und der mindestens einen Bremse verhindert;
wobei die PTO-Anordnung **dadurch gekennzeichnet ist, dass** sie des Weiteren definiert:
- eine erste Öffnung (11), die fluidisch mit der Quelle (5) verbunden ist;
- eine zweite Öffnung (12), die fluidisch mit der Bremsleitung (4) verbunden ist; und
- eine dritte Öffnung (13), die fluidisch mit der Kupplungsleitung (6) verbunden ist;
wobei die erste Ventileinrichtung (7) einen Kolben (20) aufweist, der zumindest einstellbar ist in:
- eine erste Position, in der die erste Ventileinrichtung (7) eine fluidische Verbindung zwischen der Quelle (5) und der Bremsleitung (4) durch die zweite Öffnung (12) ermöglicht;
- eine zweite Position, in der die erste Ventileinrichtung (7) eine fluidische Verbindung zwischen der Quelle (5) und der Bremsleitung (4) durch die zweite Öffnung (12) und zwischen der Quelle (5) und der Kupplungsleitung (6) durch die dritte Öffnung (13) ermöglicht.

2. Zapfwellen-Anordnung nach einem der vorhergehenden Ansprüche, wobei die zweite Ventileinrichtung (8) fluidisch in die Bremsleitung (4) eingefügt ist, wodurch ein erster Bremsleitungsabschnitt (4a) und ein zweiter Bremsleitungsabschnitt (4b) der Bremsleitung (4) definiert ist;
wobei die PTO-Anordnung (2) des Weiteren definiert:
- eine vierte Öffnung (14), die fluidisch mit dem ersten Bremsleitungsabschnitt (4a) verbunden ist; und
- eine fünfte Öffnung (15), die fluidisch mit dem zweiten Bremsleitungsabschnitt (4b) verbunden ist;
wobei die zweite Ventileinrichtung (8) einen Kolben (21) aufweist, der zumindest einstellbar ist in:
- eine erste Position, in der die zweite Ventileinrichtung (8) eine fluidische Verbindung zwischen dem ersten Bremsleitungsabschnitt (4a) und dem zweiten Bremsleitungsabschnitt (4b) durch die vierte bzw. die fünfte Öffnung (14, 15) ermöglicht; und
- eine zweite Position, in der die zweite Ventileinrichtung (8) eine fluidische Verbindung zwischen dem ersten Bremsleitungsabschnitt (4a) und dem zweiten Bremsleitungsabschnitt (4b) verhindert.

3. Zapfwellen-Anordnung nach Anspruch 2, wobei der Kolben (21) der zweiten Ventileinrichtung (8) mittels eines hydraulischen Pilotsignals betätigt wird, das von der Kupplungsleitung (6) ausströmt.

4. Zapfwellen-Anordnung nach Anspruch 2 oder 3, wobei die zweite Ventileinrichtung (8) weiterhin elastische Mittel (22) aufweist, die dazu eingerichtet sind, den Kolben (21) in Richtung seiner ersten Position vorzuspannen.

5. Zapfwellen-Anordnung nach Anspruch 4 in Abhängigkeit von Anspruch 3, wobei die Kupplungsleitung (6) eine weitere Öffnung (16) definiert, die in fluidischer Verbindung mit dem Kolben (21) der zweiten Ventileinrichtung (8) steht; wobei das hydraulische Pilotsignal von der Kupplungsleitung (6) durch die weitere Öffnung (16) strömt;
wobei das Fluid in der Kupplungsleitung (6) im Betrieb eine erste Kraft (F₁) auf den Kolben (22) der zweiten Ventileinrichtung (8) durch die weitere Öffnung (16) ausübt; wobei die erste Kraft (F₁) abhängig von dem Druck (p0) des Fluids in der Kupplungsleitung (6) ist;
wobei die elastischen Mittel (22) im Betrieb eine zweite Kraft (F₂) auf den Kolben (21) der zweiten Ventileinrichtung (8) ausüben;
wobei die erste Kraft (F₁) entgegen der zweiten Kraft (F₂) gerichtet ist.

6. Zapfwellen-Anordnung nach Anspruch 5, wobei der Kolben (21) der zweiten Ventileinrichtung (8) dazu eingerichtet ist, in die zweite Position gestellt zu werden, wenn der Druck (p0) des Fluids in der Kupplungsleitung (6) im Betrieb gleich oder größer als ein Bremsenlösedruck (p1) ist;
wobei die erste Kraft (F₁) größer als die zweite Kraft (F₂) ist, wenn der Druck (p0) des Fluids in der Kupplungsleitung (6) im Betrieb gleich oder größer als der Bremsenlösedruck (p1) ist.

7. Zapfwellen-Anordnung nach Anspruch 6, wobei der Druck (p0) des Fluids in der Kupplungsleitung (6) gleich oder größer als ein Kupplungseinrückdruck (p2) ist;
wobei der Kupplungseinrückdruck (p2) der Druck ist, bei dem im Betrieb die mindestens eine Kupplung betätigt wird;
wobei der Bremsenlösedruck (p1) niedriger als der Kupplungseinrückdruck (p2) ist.

8. Zapfwellen-Anordnung nach Anspruch 7, wobei die Ausgangswelle (3) eine Längsachse (A) definiert; wobei die Ausgangswelle (3) frei um die Längsachse (A) drehbar ist, wenn der Druck (p0) des Fluids in der Kupplungsleitung (6) im Betrieb gleich oder größer als der Bremsenlösedruck (p1) und niedriger als der Kupplungseinrückdruck (p2) ist.

9. Zapfwellen-Anordnung nach einem der Ansprüche 6 bis 8, wobei der Bremsenlösedruck (p1) in etwa 0,5 bar beträgt.

10. Zapfwellen-Anordnung nach einem der vorhergehenden Ansprüche, die des Weiteren eine Steuereinheit (30) aufweist, die dazu eingerichtet ist, das elektrisch betätigte Ventil (9) der Hydraulikanordnung (1) zu steuern.

11. Verfahren zum Steuern einer Zapfwellen (PTO)-Anordnung (2) nach einem der vorhergehenden Ansprüche, wobei das Verfahren die Schritte aufweist:
- Empfangen einer Aufforderung zum Lösen der Ausgangswelle (3) und zum Auskuppeln der mindestens einen Kupplung;
- Bereitstellen eines Steuersignals (I_{c}) an das elektrisch betätigte Ventil (9), um den Druck (p0) des Fluids in der Kupplungsleitung (6) zu variieren, so dass der Druck (p0) des Fluids in der Kupplungsleitung (6) gleich oder größer als ein Bremsenlösedruck (p1), aber niedriger als ein Kupplungseinrückdruck (p2) ist;
wobei der Bremsenlösedruck (p1) der Druck ist, bei dem die mindestens eine Bremse gelöst wird; wobei der Kupplungseinrückdruck (p2) der Druck ist, bei dem die mindestens eine Kupplung betätigt wird.

## Revendications

1. Ensemble de prise de force (PDF) (2) pour un véhicule de travail, ledit ensemble de PDF (2) comprenant :
- au moins un arbre de sortie (3) ;
- au moins un embrayage, configuré pour coupler sélectivement ledit arbre de sortie (3) à une source d'énergie mécanique dudit véhicule de travail ; et
- au moins un frein, qui est configuré pour transmettre un couple de freinage audit arbre de sortie (3) ; et
- un dispositif hydraulique (1) comprenant :
- une conduite de frein (4) raccordant fluidiquement une source de fluide sous pression (5) dudit véhicule de travail audit au moins un frein ; et
- une conduite d'embrayage (6) raccordant fluidiquement ladite source (5) audit au moins un embrayage ;
ledit dispositif hydraulique (1) comprenant en outre :
- des premiers moyens de régulation (7), qui sont configurés pour contrôler l'écoulement du fluide entre ladite source (5), ladite conduite de frein (4) et ladite conduite d'embrayage (6) ; et
- des seconds moyens de régulation (8), qui sont configurés pour contrôler l'écoulement du fluide entre ladite source (5) et ledit au moins un frein ; et
dans lequel lesdits premiers moyens de régulation (7) comprennent une vanne à actionnement électrique (9) et lesdits seconds moyens de régulation (8) comprennent une vanne à actionnement hydraulique (10) ; ladite vanne à actionnement hydraulique
(10) étant commandée en fonction de la pression (p0) dudit fluide à l'intérieur de ladite conduite d'embrayage (6),
ledit dispositif hydraulique (1) est réglable dans au moins :
- une première configuration, dans laquelle lesdits premiers moyens de régulation (7) permettent un raccordement fluidique entre ladite source (5) et ladite conduite de frein (4) et lesdits seconds moyens de régulation (8) permettent un raccordement fluidique entre ladite source (5) et ledit au moins un frein ; ou
- une seconde configuration, dans laquelle lesdits premiers moyens de régulation (7) permettent un raccordement fluidique desdites conduites de frein et d'embrayage (4, 6) avec ladite source (5) et lesdits seconds moyens de régulation (8) interdisent le raccordement fluidique entre ladite source (5) et ledit au moins un frein ;
ledit ensemble de PDF étant **caractérisé en ce qu'**il définit en outre :
- une première ouverture (11), qui est raccordée fluidiquement à ladite source (5) ;
- une deuxième ouverture (12), qui est raccordée fluidiquement à ladite conduite de frein (4) ; et
- une troisième ouverture (13), qui est raccordée fluidiquement à ladite conduite d'embrayage (6) ;
dans lequel lesdits premiers moyens de régulation (7) comprennent un tiroir (20), réglable au moins dans :
- une première position, dans laquelle lesdits premiers moyens de régulation (7) permettent un raccordement fluidique entre ladite source (5) et ladite conduite de frein (4) par le biais de ladite deuxième ouverture (12) ;
- une seconde position, dans laquelle lesdits premiers moyens de régulation (7) permettent un raccordement fluidique entre ladite source (5) et ladite conduite de frein (4) par le biais de ladite deuxième ouverture (12) et entre ladite source (5) et ladite conduite d'embrayage (6) par le biais de ladite troisième ouverture (13).

2. Ensemble de prise de force selon l'une quelconque des revendications précédentes, dans lequel lesdits seconds moyens de régulation (8) sont interposés fluidiquement dans ladite conduite de frein (4), définissant ainsi une première partie de conduite de frein (4a) et une seconde partie de conduite de frein (4b) de ladite conduite de frein (4) ;
ledit ensemble de PDF (2) définissant en outre :
- une quatrième ouverture (14), qui est raccordée fluidiquement à ladite première partie de conduite de frein (4a) ; et
- une cinquième ouverture (15), qui est raccordée fluidiquement à ladite seconde partie de conduite de frein (4b) ;
dans lequel lesdits seconds moyens de régulation (8) comprennent un tiroir (21), réglable au moins dans :
- une première position, dans laquelle lesdits seconds moyens de régulation (8) permettent un raccordement fluidique entre ladite première partie de conduite de frein (4a) et ladite seconde partie de conduite de frein (4b) par le biais de la quatrième et de la cinquième ouverture (14, 15), respectivement ; et
- une seconde position, dans laquelle lesdits seconds moyens de régulation (8) interdisent un raccordement fluidique entre ladite première partie de conduite de frein (4a) et ladite seconde partie de conduite de frein (4b).

3. Ensemble de prise de force selon la Revendication 2, **caractérisé en ce que** le tiroir (21) desdits seconds moyens de régulation (8) est actionné au moyen d'un signal pilote hydraulique, qui est propagé à partir de ladite conduite d'embrayage (6).

4. Ensemble de prise de force selon la Revendication 2 ou la Revendication 3, **caractérisé en ce que** lesdits seconds moyens de régulation (8) comprennent en outre des moyens élastiques (22), aptes à solliciter ledit tiroir (21) en direction de sa première position.

5. Ensemble de prise de force selon la Revendication 4, en cas d'interdépendance avec la Revendication 3, dans lequel ladite conduite d'embrayage (6) définit une autre ouverture (16), qui est en communication fluidique avec le tiroir (21) desdits seconds moyens de régulation (8) ; ledit signal pilote hydraulique étant propagé à partir de ladite conduite d'embrayage (6) par ladite autre ouverture (16) ;
dans lequel ledit fluide dans ladite conduite d'embrayage (6) exerce, en fonctionnement, une première force (Fi) sur le tiroir (21) desdits seconds moyens de régulation (8) par le biais de ladite autre ouverture (16) ; ladite première force (F1) dépendant de ladite pression (p0) dudit fluide dans ladite conduite d'embrayage (6) ;
dans lequel lesdits moyens élastiques (22) exercent, en fonctionnement, une seconde force (F₂) sur ledit tiroir (21) desdits seconds moyens de régulation (8) ; ladite première force (Fi) étant dirigée à l'opposé de ladite seconde force (F₂).

6. Ensemble de prise de force selon la Revendication 5, dans lequel ledit tiroir (21) desdits seconds moyens de régulation (8) est configuré pour être réglé dans ladite seconde position lorsque, en fonctionnement, ladite pression (p0) dudit fluide dans ladite conduite d'embrayage (6) est égale ou supérieure à une pression de désengagement de frein (pI) ;
ladite première force (F₁) étant supérieure à ladite seconde force (F₂) lorsque, en fonctionnement, ladite pression (p0) dudit fluide dans ladite conduite d'embrayage (6) est égale ou supérieure à ladite pression de désengagement de frein (pI)

7. Ensemble de prise de force selon la Revendication 6, dans lequel ladite pression (p0) dudit fluide dans ladite conduite d'embrayage (6) est égale ou supérieure à une pression d'engagement d'embrayage (p2) ;
ladite pression d'engagement d'embrayage (p2) étant la pression à laquelle ledit au moins un embrayage est activé, en fonctionnement ;
ladite pression de désengagement de frein (pI) étant inférieure à ladite pression d'engagement d'embrayage (p2).

8. Ensemble de prise de force selon la Revendication 7, dans lequel ledit arbre de sortie (3) définit un axe longitudinal (A) ; ledit arbre de sortie (3) pouvant tourner librement autour dudit axe longitudinal (A) lorsque, en fonctionnement, ladite pression (p0) dudit fluide dans ladite conduite d'embrayage (6) est égale ou supérieure à ladite pression de désengagement de frein (pI) et inférieure à ladite pression d'engagement d'embrayage (p2).

9. Ensemble de prise de force selon l'une quelconque des revendications 6 à 8, dans lequel ladite pression de désengagement de frein (pI) est d'environ 0,5 bar.

10. Ensemble de prise de force selon l'une quelconque des revendications précédentes, comprenant en outre une unité de commande (30), qui est configurée pour commander la vanne à actionnement électrique (9) dudit dispositif hydraulique (1).

11. Procédé de commande d'un ensemble de prise de force (PDF) (2) selon l'une quelconque des revendications précédentes, ledit procédé comprenant les étapes consistant à :
- recevoir une demande de désengagement de frein dudit arbre de sortie (3) et de désembrayage dudit au moins un embrayage ;
- fournir un signal de commande (Ic) à ladite vanne à actionnement électrique (9) de manière à faire varier la pression (p0) dudit fluide dans ladite conduite d'embrayage (6) de sorte que la pression (p0) dudit fluide dans ladite conduite d'embrayage (6) soit égale ou supérieure à une pression de désengagement de frein (pI), mais inférieure à une pression d'engagement d'embrayage (p2) ;
ladite pression de désengagement de frein (pI) étant la pression à laquelle ledit au moins un frein est désengagé ; ladite pression d'engagement d'embrayage (p2) étant la pression à laquelle ledit au moins un embrayage est engagé.
